# FASCICULE DE BREVET EUROPEEN

(11) **EP 0 855 780 B1**
(45) Date de publication et mention de la délivrance du brevet: **28.03.2007**
(21) Numéro de dépôt: 98400089.3
(22) Date de dépôt: 19.01.1998
(51) Int. Cl.: H02J 7/00

(54) **Procédé de régie pour ensemble accumulateur d'énergie électrique et agencement de commande pour l'application de ce procédé**
Verfahren zur Kontrolle eines elektrischen Akkumulator-blocks und Regelanordnung hierfür
Method of controlling electrical accumulator-pack and control arrangement therefor

(30) Priorité: 23.01.1997 FR 9700684
(43) Date de publication de la demande: 29.07.1998
(73) Titulaire: Saft Finance S.à.r.l., 1471 Luxembourg (LU)
(72) Inventeur: Perelle, Michel, 37210 Parcay-Meslay (FR); Morin, Christophe, 86530 Cenon S/Vienne (FR)
(74) Mandataire: Pochart, François

(56) Documents cités:
- EP-A- 0 652 620
- US-A- 5 469 042
- US-A- 5 504 415
- US-A- 5 542 245
- NOR ET AL: "VERY FAST BATTERY CHARGING AND BATTERY ENERGY MANAGEMENT" INTERNATIONAL ELECTRIC VEHICLE SYMPOSIUM, vol. 1, 5 - 7 décembre 1994, ANAHEIM, pages 117-125, XP000488475

## Description

L'invention concerne un procédé de régie et un agencement de commande pour l'application de ce procédé à un ensemble composé de cellules électriquement reliées en série qui comportent chacune un ou éventuellement plusieurs éléments accumulateurs d'énergie électrique, comme usuel en la matière, et plus particulièrement un agencement de commande pour ensemble de forte capacité susceptible d'être soumis à des phases alternées de décharge profonde et de recharge rapide, par exemple en étant exploité en tant que source d'énergie pour un véhicule électrique.

Comme il est connu de tels ensembles accumulateurs sont composés par association d'un nombre relativement élevé de cellules en raison des quantités d'énergie à stocker. Les cellules d'un même ensemble accumulateur qui sont couramment prévues identiques peuvent cependant présenter des caractéristiques et en conséquence des performances légèrement différentes. L'écart en matière de performances entre cellules en série d'un même ensemble accumulateur est susceptible d'augmenter de manière significative au cours du temps et au fur et à mesure des charges et décharges successives. Ceci peut conduire à une dégradation importante du fonctionnement de l'ensemble accumulateur et de l'application qui l'exploite.

Une solution permettant de limiter les augmentations d'écart entre cellules d'un ensemble accumulateur consiste à tenir compte de l'évolution individuelle des cellules qui le compose lors des phases de charge de manière à éviter de surcharger inutilement les éléments de ces cellules qui atteignent les premiers leurs pleines charges respectives.

Une telle solution est notamment décrite dans le document WO-A-9515023 où il est prévu d'associer des dispositifs individuels de surveillance et d'équilibrage à chacune des cellules d'un ensemble, dit pack, où ces cellules sont reliées en série, afin de permettre une dérivation d'au moins une partie du courant de charge transmis à une cellule lorsqu'une mesure et notamment une mesure de la tension présente aux bornes de cette cellule, atteint une valeur de consigne maximale. Un contrôleur relié aux dispositifs par une liaison numérique commune y permet l'enregistrement des écarts constatés entre cellules et un déclenchement d'alarme.

Toutefois une telle solution n'est pas pleinement satisfaisante notamment dans la mesure où il peut y avoir une forte dissipation d'énergie à des fins d'équilibrage en cours de charge, notamment si cette dernière est de type rapide avec des temps d'équilibrage relativement courts et où les opérations sont conduites de manière systématiquement identique au cours du temps.

Par ailleurs, le document US-A-5 504 415, décrit un procédé et un dispositif d'égalisation automatique de la charge de différentes cellules de batterie électriquement connectées en série pendant le processus de charge de la batterie. La tension aux bornes de chaque cellule peut être mesurée pendant la phase de charge, de décharge ou de repos. Ainsi, le contrôleur utilise cette mesure afin d'ajuster le courant de charge cellule par cellule lors de la charge. Le processus d'égalisation est cependant conduit seulement pendant le processus de charge. Le processus d'égalisation peut être conduit automatiquement à chaque période de charge.

Le présente invention propose donc un procédé de régie pour ensemble composé de cellules électriquement reliées en série qui comportent chacune au moins un élément accumulateur d'énergie électrique destiné à être soumis à des phases alternées de charge par un chargeur et de décharge en liaison avec une application que cet ensemble alimente, où chaque cellule est associée à des moyens individuels de dérivation de courant connectés aux bornes de cette cellule et pilotés par des moyens de commande qui agissent en fonction d'au moins un paramètre de cellule fournie par des moyens de mesure individuellement affectés aux cellules, ledit procédé comportant une étape d'équilibrage cellule par cellule de l'ensemble et étant caractérisé en ce que ladite étape d'équilibrage est initiable à tout moment et plus particulièrement avant détection d'une fin de phase de charge, et en ce que l'étape d'équilibrage est programmée pour être mise en oeuvre sur une durée susceptible de couvrir la totalité des différentes phases de charge, de repos entre charge par le chargeur et décharge par l'application et/ou de décharge, ladite étape d'équilibrage comprenant une étape d'interrogation répétée des circuits de mesure individuels pour recueillir les paramètres de cellules mesurés, et une étape d'envoi d'ordres aux moyens de dérivation en fonction de ces paramètres mesurés lorsqu'un déséquilibre entre cellules est constaté.

L'invention propose encore un agencement de commande pour la mise en oeuvre de ce procédé de régie à un ensemble composé de cellules électriquement reliées en série qui comportent chacune au moins un élément accumulateur d'énergie électrique destiné à être soumis à des phases alternées de charge par un chargeur et de décharge en liaison avec une application que cet ensemble alimente, où chaque cellule est associée à des moyens individuels de dérivation de courant connectés aux bornes de cette cellule et pilotés par des moyens de commande individuels, eux-mêmes supervisés par des moyens logiques de commande qui agissent en fonction d'au moins un paramètre de cellule fourni par des moyens de mesure individuellement affectés aux cellules, lesdits moyens logiques de commande étant communs de manière à recevoir des indications de mesure fournies par l'ensemble des moyens de mesure individuels des cellules et à traiter ces indications pour générer des ordres à destination des moyens individuels de dérivation de courant affectés à chaque cellule, via les moyens de commande individuels correspondants, et éventuellement à destination du chargeur commun connecté à des bornes d'extrémité dudit ensemble, caractérisé en ce que les moyens logiques de commande sont aptes à assurer des opérations d'équilibrage de charge propres à chaque cellule par l'intermédiaire du circuit de dérivation affecté à cette cellule et éventuellement par l'intermédiaire du chargeur commun, sur une durée pouvant éventuellement couvrir la totalité des différentes phases de charge, de repos entre charge par le chargeur et décharge par l'application et/ou de décharge, et en ce que les moyens logiques de commande communs comportent des moyens de supervision des cellules de l'ensemble agissant à des fins d'équilibrage de charge par interrogation répétée des circuits de mesure individuels pour recueillir les paramètres de cellules mesurés, et par envoi d'ordres aux moyens de dérivation en fonction de ces paramètres mesurés lorsque lesdits moyens de supervision constatent un déséquilibre entre cellules.

Selon une caractéristique de l'invention, les moyens de commande individuels et/ou des moyens logiques de commande communs sont dotés de moyens de mémorisation d'au moins une valeur caractéristique de l'état électrique optimal de chaque cellule de l'ensemble, les dits moyens logiques de commande communs comportant des moyens permettant de calculer au moins une valeur caractéristique de seuil d'état électrique pour chaque valeur caractéristique d'état électrique optimal et des moyens pour comparer des valeurs des paramètres de cellules mesurés par les moyens de mesure pour chacune des cellules de l'ensemble aux valeurs de seuil état électrique, et notamment à au moins une valeur de seuil d'état électrique déterminée pour chaque cellule.

Selon une caractéristique d'une variante de l'invention, les moyens logiques de commande communs comportent des moyens de calcul aptes à prendre en compte les paramètres de cellules mesurés, précédemment au cours d'au moins une phase d'équilibrage précédente pour une cellule donnée, dans la détermination des ordres destinés aux moyens individuels de dérivation de courant de cette cellule, de manière à alterner en conséquence les mises en et hors circuit de ces moyens de dérivation de manière individualisée pour chaque cellule.

Selon une caractéristique d'une variante de l'invention, les moyens logiques de commande communs comportent des moyens aptes à déterminer la durée d'équilibrage par cellule, après apparition d'un déséquilibre déterminé par les dits moyens logiques de commun à partir des paramètres de cellules mesurés par les moyens de mesure individuels des cellules.

Selon une caractéristique d'une variante de l'invention, les moyens logiques de commande communs comportent des moyens aptes à calculer une valeur caracténstique de capacité pour chaque cellule en fonction du temps de charge de cette cellule et de l'intensité du courant de charge ou des courants de charge successivement choisis, de manière que l'équilibrage prenne en compte les éventuelles différences de capacité prévues entre cellules.

L'invention, ses caractéristiques et ses avantages sont précisés dans la description qui suit en liaison avec les figures évoquées ci-dessous.
La figure 1 présente un schéma d'un exemple d'agencement de commande selon l'invention destiné à permettre l'application du procédé de régie selon l'invention à un ensemble accumulateur d'énergie électrique.
La figure 2 est un schéma de blocs plus particulièrement relatif à la logique de commande de l'agencement selon l'invention.

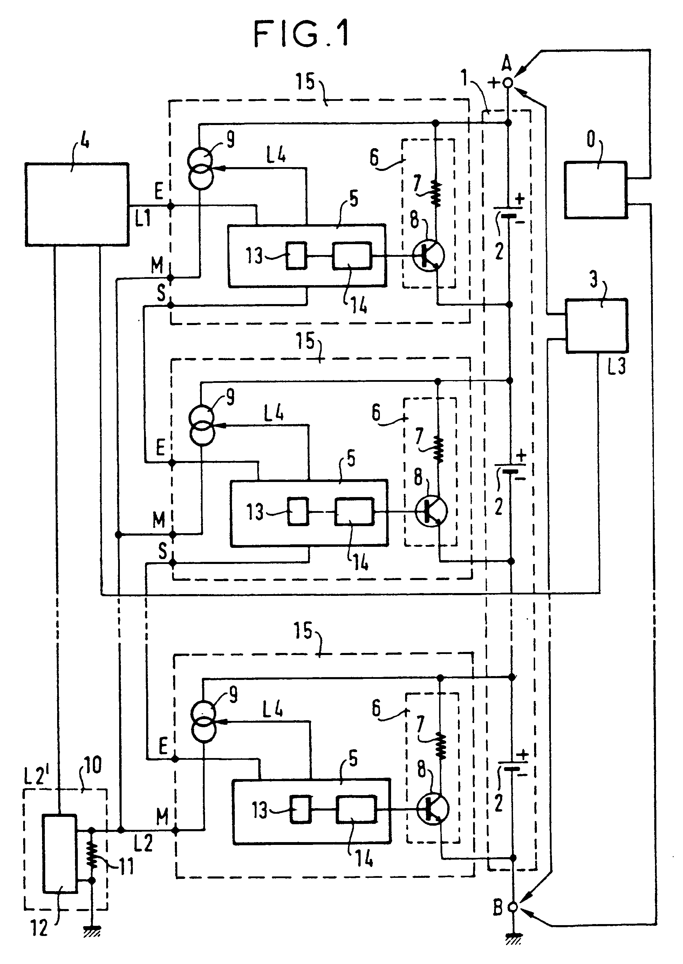

L'agencement présenté en figure 1 est destiné à être associé à un ensemble 1 composé de cellules 2 électriquement reliées en série qui comportent chacune un ou éventuellement plusieurs éléments accumulateurs d'énergie électrique et qui constituent par exemple une source d'énergie à forte capacité de stockage pour une application, telle que par exemple un véhicule électrique routier. Ces cellules sont ici supposées reliées en série entre deux bornes A et B, dites d'extrémité, de l'ensemble accumulateur par l'intermédiaire desquelles celui-ci est susceptible d'être relié à une application 0, classiquement un appareillage, en vue de l'alimenter et/ou à un chargeur 3 en vue d'être alimenté.

Une logique de commande commune 4 est prévue dans l'agencement, elle est par exemple organisée autour d'un microcontrôleur auquel sont associés des auxiliaires tels que des mémoires vives et/ou mortes d'une manière connue qui ne sera pas développée ici.

La logique de commande 4 comporte au moins une interface d'entrée-sortie ici supposée reliée d'une part à une liaison de sortie L1 lui permettant d'envoyer des signaux de commande vers des circuits individuels de commande 5 de l'agencement qui sont respectivement associés chacun à une cellule différente de l'ensemble 1 et, d'autre part, à une liaison d'entrée L2' lui permettant de recevoir des indications de mesure. Ces indications sont transmises sous la forme de signaux traduisant notamment l'évolution de l'état de charge de chaque cellule de l'ensemble 1, par exemple à partir de mesures de tension réalisées au niveau des cellules.

La logique de commande 4 est aussi supposée apte à communiquer mono ou bi-directionnellement avec le chargeur 3 à des fins de supervision, par exemple par l'intermédiaire d'une liaison, ici référencée L3. Les opérations de charge sont supposées réalisées à courant constant, l'intensité de ce courant de charge constant étant fixée par la logique de commande 4 qui est prévue pour agir sur le chargeur de manière à modifier la valeur du courant de charge, si besoin est.

Un circuit individuel de dérivation de courant 6 est relié aux bornes d'alimentation + et - propres à chaque cellule parallèlement à cette cellule pour permettre d'établir une liaison entre ces bornes.

Chaque circuit de dérivation 6 est constitué par une résistance de dérivation 7, préférablement extérieure au circuit dont les autres composants sont préférablement intégrés avec les éléments constitutifs du circuit individuel de commande qui les comportent, à l'exception toutefois de ladite résistance de dérivation 7, si celle-ci n'est pas intégrable en raison de sa trop forte dissipation thermique. Les mises en et hors fonction de cette résistance 7 sont assurées par un organe 8, dit de commande de courant qui est de type commutateur et qui est symbolisé ici par un transistor. Le cas échéant, ceci permet de dériver une partie du courant de charge parvenant au niveau d'une cellule hors de cette dernière, lorsque la résistance 7 du circuit de dérivation 6 associé à cette cellule est mise en fonction.

Chaque circuit de dérivation 6 permet aussi, le cas échéant, une décharge individuelle de la cellule à laquelle il est associé. Ceci permet par exemple de ramener individuellement une cellule à un niveau d'état de charge déterminé et autorise en conséquence un équilibrage entre cellules.

Chaque circuit de dérivation 6 est piloté par la logique de commande 4 au travers du circuit de commande 5 associé à la même cellule que lui.

Les circuits de commande 5 que comporte l'agencement de contrôle sont ici supposés reliés en série à la logique de commande 4 par l'intermédiaire d'une liaison, monofilaire, de commande L1. Cette dernière est ici supposée transmettre, sous forme de trains successifs, des impulsions de commande émanant de la logique de commande 4.

De telles organisations de commande par trains d'impulsions sont notamment décrites dans les documents FR-A-2713781 et FR-A-2719126 qui sont respectivement relatifs à une organisation de transmission unidirectionnelle et à une organisation de transmission potentiellement bidirectionnelle des impulsions.

Dans l'exemple présenté et pour des raisons de simplification du présent exposé c'est une organisation de transmission unidirectionnelle qui est figurée. Chaque circuit de commande 5 est supposé avoir une entrée E lui permettant de recevoir les impulsions qui lui sont transmises par la liaison de commande L1 depuis la logique de commande 4 et via éventuellement un ou plusieurs circuits de commande 5 situés en amont sur cette liaison. Comme indiqué dans les deux demandes de brevet évoquées ci-dessus, chaque circuit de commande 5 capture les impulsions de commande qui lui sont destinées et transmet, via une sortie S, les impulsions de commande qui sont destinées au(x) circuit(s) de commande 5 situé(s) en aval de lui sur la liaison de commande, dans la mesure où il y a de tels circuits en aval.

Dans une forme de réalisation, chaque circuit de commande 5 capture un nombre entier "n" des "N" impulsions de commande que contient chaque train reçu par lui, ces "n" impulsions sont par exemple celles qui sont reçues en premier par ce circuit de commande pour chaque train.

Chaque circuit de commande 5 est affecté à la commande du circuit de dérivation 6 associé à la même cellule 2 que lui et à la commande d'un circuit individuel 9 par l'intermédiaire duquel sont transmises les indications correspondant aux mesures effectuées au niveau de ladite cellule.

Les circuits de commande 5 sont supposés comporter au moins un dispositif de mémorisation des signaux de mesure à transmettre de manière à pouvoir conserver au moins la dernière de chacune des indications correspondant aux mesures effectuées à des fins de transmission, ces mémoires sont par exemple de type capacitif. Les circuits de transmission 9 sont ici représentés sous la forme de générateurs de courant dans la mesure où ils sont ici supposés fournir des signaux de mesure transmis sous la forme de courants à un transducteur de mesure 10 commun. Ce dernier comporte par exemple une résistance de mesure 11 associée à un dispositif convertisseur 12 qui permet de numériser et éventuellement prétraiter les signaux au profit de la logique de commande 4.

A cet effet chaque circuit de mesure 9 transmet les signaux de mesure en courant obtenus pour la cellule à laquelle il est associé au transducteur de mesure commun. Cette transmission s'effectue via une liaison de mesure L2 commune, à laquelle chaque circuit de mesure est raccordé par une sortie M individuelle.

Dans une forme de réalisation et comme indiqué plus haut, les indications de mesure en courant traduisent les tensions mesurées aux bornes des cellules de l'ensemble et elles permettent à la logique de commande 4 de déterminer les déséquilibres existant en matière de tension et/ou d'état de charge entre ces cellules.

Chaque indication correspondant à un signal de mesure fourni par un circuit de mesure 9 est transmise, sous l'action du circuit de commande 5 qui le pilote, à réception d'une impulsion de commande prédéterminée par ce dernier. Dans l'exemple envisagé, celle-ci est une impulsion émise en un rang prédéterminé par la logique de commande 4 dans le train d'impulsions qui la comporte.

Les émissions des indications correspondant aux signaux de mesure produits par un circuit de mesure 9 sous la supervision du circuit de commande 5 correspondant sont obtenues par des moyens connus qui sont ici symbolisés par une liaison L4 et qui ne seront pas développés en liaison avec la figure 1 de même que le procédé mis en oeuvre dans la mesure où ils sont susceptibles de correspondre à ceux décrits dans les deux demandes de brevet français évoquées plus haut et où ils n'ont qu'un rapport indirect avec l'objet de la présente invention. Ces indications de mesure permettent à la logique de commande 4 de déterminer comment elle doit agir sur les circuits de dérivation 6 en fonction des déséquilibres constatés et/ou calculés.

Chaque circuit de dérivation 6 associé à une cellule est piloté par les ordres qui sont envoyés par la logique de commande 4 au circuit de commande 5 associé à la même cellule que lui.

Dans une forme préférée de réalisation, un dispositif discriminateur 13 permet de distinguer les fonctions attribuées aux diverses commandes reçues par un circuit de commande 5 en fonction de critères prédéterminés.

Dans la réalisation ici envisagée, les commandes sont supposées transmises par des impulsions émises depuis la logique de commande 4 avec un même rang prédéterminé d'impulsion dans chacun des trains que cette logique envoie à un rythme déterminé par l'intermédiaire de la liaison de commande L1. L'état de mise en ou hors fonction d'un circuit de dérivation 6 est par exemple fixé par la durée de l'impulsion de rang prédéterminé que reçoit le circuit de commande associé à ce circuit de dérivation pour ce dernier. Les impulsions de commande pour circuits de dérivation 6 sont ici supposées émises à raison d'une impulsion par train et par circuit.

Le dispositif discriminateur 13 est prévu pour permettre de déterminer si la durée d'une impulsion, reçue par un circuit de commande pour le circuit de dérivation 6 associé, correspond à un ordre de mise en ou hors fonction de ce circuit de dérivation. Dans une forme préférée de réalisation, la réception d'une impulsion d'une première durée, supérieure à une valeur fixée, pour un circuit de dérivation correspond à un ordre de commutation à l'état passant de ce circuit. La réception d'une impulsion d'une seconde durée, inférieure à la valeur fixée indiquée ci-dessus, correspond à un ordre de commutation à l'état bloquant.

Le dispositif discriminateur 13 qui reçoit les impulsions concernant un circuit de dérivation 6 correspond par exemple à un classique circuit comparateur apte à prendre en compte deux durées différentes d'impulsion et à produire un signal de type binaire dont le niveau est fonction de la durée reconnue.

Un dispositif à mémoire 14 est placé en sortie du dispositif discriminateur 13, il place et conserve le circuit de dérivation 6 associé soit dans un état passant soit dans un état bloquant, suivant la dernière commande reçue de la logique de commande 4 pour ce circuit, soit par exemple suivant la durée de l'impulsion de commande reçue, dans l'exemple envisagé ici.

Chaque circuit de dérivation 6 est ainsi mis en service à réception d'une impulsion d'une durée donnée et d'un rang prédéterminé d'un premier train, il se maintient en service tant qu'une impulsion de même rang prédéterminé d'un autre train ne présente pas une autre durée donnée. L'état en ou hors fonction du circuit de dérivation est ici prévu maintenu tant que des impulsions de même durée ayant le rang prédéterminé sont reçues.

Dans une forme préférée de réalisation, chaque circuit de dérivation 6 relatif à une cellule, le circuit de commande 5 et le circuit de mesure 9 correspondants sont préférablement regroupés dans un même module 15, celui-ci étant par exemple constitué par un circuit intégré auquel est relié la résistance de dérivation 7 du circuit de dérivation. Plusieurs modules 15 peuvent éventuellement être réunis en un sous-ensemble partageant un même circuit intégré.

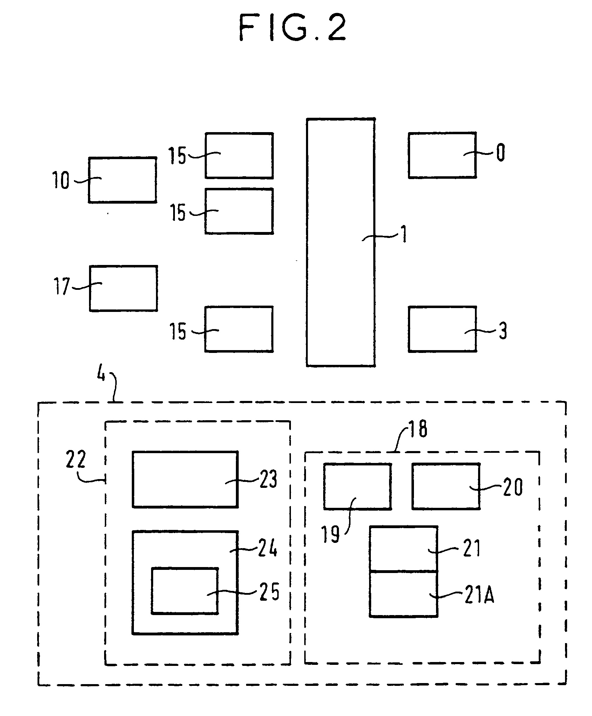

Comme indiqué plus haut et comme suggéré en figure 2, la logique de commande 4 qui est ici supposée organisée autour d'un ensemble 18 comportant au moins un microcontrôleur 19, des mémoires 20 et des interfaces d'entrée-sortie 21 lui permettant de communiquer avec l'application 0, le chargeur 3 et les modules 15 et l'utilisateur, via une interface homme-machine 21A pour ce dernier.

Cette logique de commande 4 est par exemple prévue alimentée de manière permanente, elle est alors associée à un circuit 17 qui est relié au moins à un élément accumulateur d'énergie électrique et qui dispose éventuellement d'un dispositif d'interface, non représenté, permettant de l'alimenter à partir d'une source fixe, lorsque cette logique est susceptible d'être reliée à une telle source, par exemple en phase de charge de l'ensemble 1 à partir d'une source externe auquel le chargeur 3 est alors raccordé.

Dans une forme de réalisation ici considérée, l'alimentation en énergie de la logique de commande 4 est réalisée à partir d'au moins un élément accumulateur et par exemple par une batterie auxiliaire, de même qu'éventuellement celle des modules 15. La logique de commande 4 est préférablement dotée de moyens de mémoire 20, ici supposés de type connu, lui permettant de conserver de manière permanente ou semi-permanente au moins certaines données, en plus des programmes qu'elle contient, en cas de coupure d'alimentation, de tels moyens éventuellement semi-permanents étant aussi associés aux modules;

Dans la réalisation proposée, la programmation de la logique de commande 4 est réalisée de manière qu'un processus d'équilibrage électrique entre cellules de l'ensemble qui est considéré comme nécessaire au maintien d'un rendement optimal de l'ensemble 1 à des fins d'alimentation de l'application 0 à laquelle il est associé. Ce processus d'équilibrage est ici réalisé d'une manière qu'il est possible de considérer comme continue au moins dans une première approximation, même si pratiquement des dissociations entre ensemble 1 et application 0 sont susceptibles d'être réalisées, pour des raisons liées à l'exploitation de cet ensemble et de cette application.

Dans une forme préférée de réalisation, les moyens logiciels 22 installés au niveau de la logique de commande 4 sont prévus pour pouvoir être actifs au cours des différentes phases de fonctionnement de l'ensemble 1 en relation avec l'application 0 et avec le chargeur 3, y compris notamment au cours des phases de repos, le cas échéant. Ceci conduit notamment à ce que la commande d'un circuit de dérivation 6, par la logique de commande 4 à des fins d'équilibrage puisse être assurée en phase de repos, lorsque l'ensemble 1 n'est pas utilisé pour alimenter en puissance l'application 0, en plus de l'utilisation usuelle des circuits de dérivation en phase de charge, notamment rapide, et/ou de décharge. Dans la mesure où au moins dans certaines exploitations, les phases de repos d'un ensemble 1 sont susceptibles d'être beaucoup plus longues que celles de charge et/ou de décharge, il est ainsi possible de commencer un processus d'équilibrage des cellules d'un ensemble au début d'une charge et de poursuivre en phase de repos, voire de décharge, les équilibrages usuellement initiés en fin de phase de charge, rapide ou lente. De ce fait, ces équilibrages sont susceptibles de s'effectuer avec de faibles courants de dérivation, ce qui permet de réduire les pertes d'énergie par dissipation thermique et en conséquence les coûts au niveau des moyens matériels propres à l'agencement selon l'invention et au niveau exploitation de l'application 0 alimentée par l'ensemble 1.

Des moyens de supervision 23, éventuellement distincts des moyens logiciels 22 auxquels ils sont ici supposés incorporés, permettent à la logique de commande 4 de réaliser une supervision pratiquement permanente des cellules de l'ensemble 1 notamment pour en assurer l'équilibrage de manière à les amener à présenter une même tension et/ou un même écart de capacité par rapport à la capacité maximale prévue pour chaque cellule, éventuellement à titre individuel. A cet effet, ces moyens de supervision 23 commandent une interrogation répétée et par exemple cyclique des circuits de mesure individuels 9 des cellules 2 de l'ensemble 1 en vue d'obtenir des indications relatives aux mesures que ces circuits de mesure ont effectués et que dans une forme préférée de réalisation, ils ont au moins temporairement mémorisés. Les indications reçues par la logique de commande 4 sont exploitées par des moyens logiciels de traitement 24 et éventuellement conservés en mémoire 20. Ces indications sont notamment utilisées pour générer les ordres transmis au circuit de commande de chacun des modules 15 pour le circuit de dérivation 6 que chaque module comporte, elles permettent aussi le pilotage du chargeur 3.

Dans une forme préférée de réalisation, les moyens logiciels de traitement assurent une gestion individualisée de chaque cellule 2 de l'ensemble 1 en fonction des indications tant nouvellement reçues suite à une interrogation adressée au module 15 associé à cette cellule que celles dont le traitement a été précédemment réalisé et a été stocké, préférablement depuis la mise en service initiale de la cellule dans l'ensemble 1. Ceci permet de tenir compte des différences de caractéristiques entre cellules qui sont susceptibles d'apparaître au cours du temps, pour des cellules généralement prévues identiques. A cet effet, les moyens logiciels de traitement commandent séparément chacun des circuits de dérivation 6 par l'intermédiaire du dispositif à mémoire 14 correspondant en fonction des caractéristiques propres à la cellule 2 correspondante. Ils agissent préférablement par envoi d'ordres successifs de mise en et hors service des circuits de dérivation, chacun de ces derniers étant maintenus, soit en service, soit hors service, suivant l'ordre individuel reçu en dernier.

Au moins une valeur caractéristique de l'état électrique optimal prévu pour chaque cellule 2 de l'ensemble 1 est stockée en mémoire 20 et éventuellement au niveau des dispositifs à mémoire 14 pour permettre d'évaluer par exemple par comparaison une valeur déterminée à partir d'une mesure effectuée au niveau de chaque cellule avec la valeur correspondante stockée correspondante. Des moyens de calcul 25, ici supposés contenus dans les moyens logiciels de traitement 24 fournissent des indications de valeurs caractéristiques de seuil, par exemple en tension, qui permettent d'agir sur des moyens de signalisation prévus au niveau de l'interface homme-machine 21A.

Dans une variante de réalisation, les moyens de calcul 25 sont programmés pour déterminer la valeur de la capacité de chaque cellule en fonction du temps de charge et de l'intensité du ou des courants de charge successivement choisis au cours d'une même phase de charge de l'ensemble 1.

## Revendications

1. Procédé de régie pour ensemble (1) composé de cellules (2) électriquement reliées en série qui comportent chacune au moins un élément accumulateur d'énergie électrique destiné à être soumis à des phases alternées de charge par un chargeur (3) et de décharge en liaison avec une application (0) que cet ensemble alimente, où chaque cellule est associée à des moyens individuels de dérivation de courant (6) connectés aux bornes de cette cellule et pilotés par des moyens de commande (4, 5) qui agissent en fonction d'au moins un paramètre de cellule fournie par des moyens de mesure (9) individuellement affectés aux cellules, ledit procédé comportant une étape d'équilibrage cellule par cellule de l'ensemble (1) et étant **caractérisé en ce que** ladite étape d'équilibrage est initiable à tout moment et plus particulièrement avant détection d'une fin de phase de charge, et **en ce que** l'étape d'équilibrage est programmée pour être mise en oeuvre sur une durée susceptible de couvrir la totalité des différentes phases de charge, de repos entre charge par le chargeur (3) et décharge par l'application (0) et/ou de décharge, ladite étape d'équilibrage comprenant une étape d'interrogation répétée des circuits de mesure individuels (9) pour recueillir les paramètres de cellules mesurés, et une étape d'envoi d'ordres aux moyens de dérivation (6) en fonction de ces paramètres mesurés lorsqu'un déséquilibre entre cellules est constaté.

2. Agencement de commande pour ensemble (1) composé de cellules (2) électriquement reliées en série qui comportent chacune au moins un élément accumulateur d'énergie électrique destiné à être soumis à des phases alternées de charge par un chargeur (3) et de décharge en liaison avec une application (0) que cet ensemble alimente, où chaque cellule est associée à des moyens individuels de dérivation de courant (6) connectés aux bornes de cette cellule et pilotés par des moyens de commande individuels (5), eux-mêmes supervisés par des moyens logiques de commande (4) qui agissent en fonction d'au moins un paramètre de cellule fourni par des moyens de mesure (9) individuellement affectés aux cellules, lesdits moyens logiques de commande (4) étant communs de manière à recevoir des indications de mesure fournies par l'ensemble des moyens de mesure individuels des cellules et à traiter ces indications pour générer des ordres à destination des moyens individuels de dérivation de courant (6) affectés à chaque cellule, via les moyens de commande individuels correspondants (5), et éventuellement à destination du chargeur (3) commun connecté à des bornes d'extrémité (A, B) dudit ensemble (1), **caractérisé en ce que** les moyens logiques de commande (4) sont aptes à assurer des opérations d'équilibrage de charge propres à chaque cellule par l'intermédiaire du circuit de dérivation affecté à cette cellule et éventuellement par l'intermédiaire du chargeur (3) commun, sur une durée pouvant éventuellement couvrir la totalité des différentes phases de charge, de repos entre charge par le chargeur (3) et décharge par l'application (0) et/ou de décharge, et **en ce que** les moyens logiques de commande communs (4) comportent des moyens de supervision des cellules (2) de l'ensemble (1) agissant à des fins d'équilibrage de charge par interrogation répétée des circuits de mesure individuels (9) pour recueillir les paramètres de cellules mesurés, et par envoi d'ordres aux moyens de dérivation (6) en fonction de ces paramètres mesurés lorsque lesdits moyens de supervision constatent un déséquilibre entre cellules.

3. Agencement selon la revendication 2, **caractérisé en ce que** les moyens de commande individuels (5) et/ou des moyens logiques de commande communs (4) sont dotés de moyens de mémorisation (14, 20) d'au moins une valeur caractéristique de l'état électrique optimal de chaque cellule de l'ensemble, les dits moyens logiques de commande communs comportant des moyens permettant de calculer au moins une valeur caractéristique de seuil d'état électrique pour chaque valeur caractéristique d'état électrique optimal et des moyens pour comparer des valeurs des paramètres de cellules mesurés par les moyens de mesure pour chacune des cellules de l'ensemble aux valeurs de seuil d'état électrique, et notamment à au moins une valeur de seuil d'état électrique déterminée pour chaque cellule.

4. Agencement selon l'une des revendications 2 et 3, **caractérisé en ce que** les moyens logiques de commande communs comportent des moyens de calcul aptes à prendre en compte les paramètres de cellules mesurés, précédemment au cours d'au moins une phase d'équilibrage précédente pour une cellule donnée, dans la détermination des ordres destinés aux moyens individuels de dérivation de courant de cette cellule, de manière à alterner en conséquence les mises en et hors circuit de ces moyens de dérivation de manière individualisée pour chaque cellule.

5. Agencement selon la revendication 4, **caractérisé en ce que** les moyens logiques de commande communs comportent des moyens aptes à déterminer la durée d'équilibrage par cellule, après apparition d'un déséquilibre déterminé par les dits moyens logiques de commun à partir des paramètres de cellules mesurés par les moyens de mesure individuels des cellules.

6. Agencement selon la revendication 5, **caractérisé en ce que** les moyens logiques de commande communs comportent des moyens aptes à calculer une valeur caractéristique de capacité pour chaque cellule en fonction du temps de charge de cette cellule et de l'intensité du courant de charge ou des courants de charge successivement choisis, de manière que l'équilibrage prenne en compte les éventuelles différences de capacité prévues entre cellules.

## Claims

1. A management method for a system (1) made up of cells (2) electrically connected in series that each include at least one electrical energy storage battery unit for subjection to alternating charge and discharge phases by a charger (3) in association with an application (0) powered by the system in which each cell is associated with an individual current bypass circuit (6) connected to terminals of said cell and controlled by control means (4, 5) operating in accordance with at least one cell parameter supplied by measuring means (9) individually assigned to the cells, said method comprising a step of balancing, cell by cell, the system (1) and **characterized in that** the balancing step can be initiated at any time and more particularly before the end of a charge phase is detected, and **in that** the balancing step is programmed to be implemented over a duration able to cover all the various phases of charge, rest between charges by the charger (3) and discharge by the application (0) and/or discharge, said balancing step comprising a step in which individual measuring circuits (9) are polled to collect parameters of the measured cells, and a step in which instructions are sent to the individual current bypass circuits (6) as a function of these parameters measured when unbalance between cells is determined.

2. A control arrangement for a system (1) made up of cells (2) electrically connected in series that each include at least one electrical energy storage battery unit for subjection to alternating charge and discharge phases by a charger (3) in association with an application (0) powered by the system in which each cell is associated with an individual current bypass circuit (6) connected to terminals of said cell and controlled by individual control means (5) which are themselves supervised by logic control means (4) operating in response to at least one cell parameter supplied by measuring means (9) individually assigned to cells, said logic control means (4) being common so as to receive measurement indications supplied by all the individual measurement means for the cells and to process said indications to generate instructions for the individual current bypass means (6) assigned to each cell, via the corresponding individual control means (5), and optionally for the common charger (3) connected to the end terminals (A, B) of said system (1), **characterised in that** the common control logic means (4) are adapted to provide charge balancing operations specific to each cell via the bypass circuit assigned to that cell and, optionally, via the common charger (3), over a duration which optionally can cover the totality of the various stages of charging, rest between charging by the charger (3) and discharge by the application (0) and/or of discharge, and **in that** the common logic control means (4) include means for monitoring of the cells (2) of the system (1) acting for charge balancing purposes by repeatedly polling the individual measurement circuits (9) to collect parameters of cells measured, and by sending instructions to the bypass means (6) depending on these measured parameters when said monitoring means determine imbalance between cells.

3. The control arrangement of claim 2, **characterized in that** said individual control means (5) and/or common logic control means (4) include memory means (14,20) for at least one value characteristic of the optimal electrical status of each cell of the collection of cells, said common logic control means including means adapted to measure at least one value characteristic of electrical status threshold for each status characteristic value to be calculated and means for comparing values of cell parameters measured by the measuring means for each one of the cells of the collection of cells with the electrical status threshold values, and notably with at least one electrical status threshold value determined for each cell.

4. The control arrangement of one of claims 2 or 3, **characterized in that** said common control logic further comprises computing means adapted to take account of cell parameters measured previously during at least one previous balancing phase for a given cell, in determining instructions for the individual current bypass means for that cell, to consequently alternate the switching on and off of said bypass means in a manner customized for each cell.

5. The control arrangement of claim 4, **characterized in that** the common control logic means further comprise means adapted for determining the balancing time per cell after appearance of an imbalance determined by said common control logic means from cell parameters measured by the individual cell measurement means.

6. The control arrangement of claim 5, **characterized in that** said common control logic means further comprises means suitable for calculating a characteristic capacity value for each cell according to the time for charging that cell and the charging current or charging currents successively chosen so that said balancing takes account of any capacity differences provided for between cells.

## Patentansprüche

1. Regieverfahren für eine Einheit (1), bestehend aus elektrisch in Serie verbundenen Zellen (2), die jeweils mindestens ein Speicherelement für elektrische Energie umfassen, das dazu bestimmt ist, alternierenden Ladephasen durch ein Ladegerät (3) und Entladephasen in Verbindung mit einer Anwendung (0), die diese Einheit speist, unterzogen zu werden, bei der jede Zelle mit individuellen Stromabzweigungsmitteln (6) verbunden ist, die an die Klemmen dieser Zelle angeschlossen sind und von Steuermitteln (4, 5) gesteuert werden, die in Abhängigkeit von mindestens einem Zellparameter wirken, der von Messhilfsmitteln.(9), die den Zellen individuell zugeteilt sind, geliefert wird, wobei das Verfahren einen Schritt des Ausgleichs Zelle für Zelle der Einheit (1) umfasst und **dadurch gekennzeichnet ist, dass** der Ausgleichsschritt jederzeit initiierbar ist, insbesondere vor Erfassung eines Ladephasenendes, und dass der Ausgleichsschritt derart programmiert ist, dass er über eine Dauer eingesetzt wird, der die Gesamtheit der verschiedenen Phasen des Ladens, der Ruhe zwischen dem Laden durch das Ladegerät (3) und des Entladens durch die Anwendung (0) und/oder des Entladens abdecken kann, wobei der Ausgleichsschritt einen Schritt der wiederholten Abfrage der individuellen Messschaltungen (9), um die gemessenen Zellparameter zu sammeln, und einen Schritt des Sendens von Befehlen an die Abzweigungsmittel (6) in Abhängigkeit von diesen gemessenen Parametern umfasst, wenn ein Ungleichgewicht zwischen den Zellen festgestellt wird.

2. Steueranordnung für eine Einheit (1), bestehend aus elektrisch in Serie verbundenen Zellen (2), die jeweils mindestens ein Speicherelement für elektrische Energie umfassen, das dazu bestimmt ist, alternierenden Ladephasen durch ein Ladegerät (3) und Entladephasen in Verbindung mit einer Anwendung (0), die diese Einheit speist, unterzogen zu werden, bei der jede Zelle mit individuellen Stromabzweigungsmitteln (6) verbunden ist, die an die Klemmen dieser Zelle angeschlossen sind und von individuellen Steuermitteln (5) gesteuert werden, die selbst von logischen Steuermitteln (4) überwacht werden, die in Abhängigkeit von mindestens einem Zellparameter wirken, der von Messhilfsmitteln (9) geliefert wird, die individuell den Zellen zugeteilt sind, wobei die logischen Steuermittel (4) gemeinsam sind, um Messangaben zu empfangen, die von der Gesamtheit der individuellen Messhilfsmittel der Zellen geliefert werden, und um diese Angaben zu bearbeiten, um Befehle in Richtung der individuellen Stromabzweigungsmittel (6), die jeder Zelle zugeordnet sind, über die entsprechenden individuellen Steuermittel (5) und eventuell in Richtung des gemeinsamen Ladegeräts (3), das an Endklemmen (A, B) der Einheit (1) angeschlossen ist, zu erzeugen, **dadurch gekennzeichnet, dass** die logischen Steuermittel (4) Ladeausgleichsschritte, die jeder Zelle eigen sind, über die dieser Zelle zugeteilte Abzweigungsschaltung und eventuell mit Hilfe des gemeinsamen Ladegeräts (3) über eine Dauer sicherstellen können, die eventuell die Gesamtheit der verschiedenen Phasen des Ladens, der Ruhe zwischen dem Laden durch das Ladegerät (3) und des Entladens durch die Anwendung (0) und/oder des Entladens abdecken kann, und dass die gemeinsamen logischen Steuermittel (4) Überwachungsmittel der Zellen (2) der Einheit (1) umfassen, die zu Ladeausgleichszwecken durch wiederholtes Abfragen der individuellen Messschaltungen (9), um die gemessenen Zellparameter zu sammeln, und durch Entsenden von Befehlen an die Abzweigungsmittel (6) in Abhängigkeit von diesen gemessenen Parametern wirken, wenn die Überwachungsmittel ein Ungleichgewicht zwischen Zellen feststellen.

3. Anordnung nach Anspruch 2, **dadurch gekennzeichnet, dass** die individuellen Steuermittel (5) und/oder gemeinsame logische Steuermittel (4) mit Speichermitteln (14, 20) von mindestens einem charakteristischen Wert des optimalen elektrischen Zustandes jeder Zelle der Einheit versehen sind, wobei die gemeinsamen logischen Steuermittel Mittel, die es ermöglichen, mindestens einen charakteristischen Schwellenwert für den elektrischen Zustand für jeden charakteristischen Wert des optimalen elektrischen Zustandes zu berechnen, und Mittel umfassen, um Werte der durch die Messhilfsmittel gemessenen Zellparameter für jede der Zellen der Einheit mit den Schwellenwerten des elektrischen Zustandes zu vergleichen, und insbesondere mit mindestens einem bestimmten Schwellewert des elektrischen Zustandes für jede Zelle.

4. Anordnung nach einem der Ansprüche 2 und 3, **dadurch gekennzeichnet, dass** die gemeinsamen logischen Steuermittel Berechnungsmittel umfassen, die die vorher während mindestens einer vorhergehenden Ausgleichsphase für eine gegebene Zelle gemessenen Zellparameter bei der Bestimmung der Befehle für die individuellen Stromabzweigungsmittel dieser Zelle berücksichtigen können, um folglich die Ein- und Ausschaltungen dieser Abzweigungsmittel individuell für jede Zelle zu alternieren.

5. Anordnung nach Anspruch 4, **dadurch gekennzeichnet, dass** die gemeinsamen logischen Steuermittel Mittel umfassen, die die Ausgleichsdauer pro Zelle nach Auftreten eines Ungleichgewichts bestimmen können, das von den gemeinsamen logischen Mitteln aus von den individuellen Messhilfsmitteln der Zellen gemessenen Zellparametern bestimmt wird.

6. Anordnung nach Anspruch 5, **dadurch gekennzeichnet, dass** die gemeinsamen logischen Steuermittel Mittel umfassen, um einen charakteristischen Kapazitätswert für jede Zelle in Abhängigkeit von der Ladezeit dieser Zelle und der Ladestromstärke oder den nacheinander gewählten Ladeströmen zu berechnen, so dass der Ausgleich die möglichen zwischen den Zellen vorgesehenen Kapazitätsunterschiede berücksichtigt.
